# EUROPEAN PATENT APPLICATION

(11) **EP 3 678 329 A1**
(43) Date of publication of application: **08.07.2020**
(21) Application number: 18850699.2
(22) Date of filing: 23.08.2018
(51) Int. Cl.: H04L 12/14

(54) **CHARGING REALISATION SYSTEM, CHARGING REALISATION METHOD AND CHARGING MANAGEMENT FUNCTIONAL ENTITY**

(30) Priority: 30.08.2017 CN 201710766197
(71) Applicant: ZTE Corporation, Shenzhen, Guangdong 518057 (CN)
(72) Inventor: LIN, Kai, Shenzhen Guangdong 518057 (CN); YE, Minya, Shenzhen Guangdong 518057 (CN); YANG, Minggui, Shenzhen Guangdong 518057 (CN)
(74) Representative: Aipex B.V.
(86) International application number: PCT/CN2018/102024
(87) International publication number: WO 2019/042218

(57) **Abstract**

Provided are a charging realisation system and method, and a charging management function entity. The charging realisation system includes: a network function entity, a user plane function entity and a charging management function entity. The charging management function entity is connected to the network function entity and the user plane function entity. The charging management function entity is configured to execute at least one of: issuing a charging strategy to the user plane function entity or the network function entity; collecting charging information from the network function entity and the user plane function entity; or reporting the charging information.

## Description

### CROSS-REFERENCES TO RELATED APPLICATIONS

This application is based upon and claims priority to a Chinese patent application No. 201710766197.3 filed on August 30, 2017, the entire content of which is incorporated herein by reference.

### TECHNICAL FIELD

The present disclosure relates to, but is not limited to, the field of communications.

### BACKGROUND

Mobile communication has experienced rapid development from voice services to data services, which has profoundly changed people's life style and greatly promoted the rapid development of society and economy. As the main driving force of the development of the future mobile communication, the mobile Internet and the Internet of Things provide a broad prospect for the fifth generation (5G) communication. The data traffic supported by the 5G systems is increased by thousand times, and trillions of devices are connected. The Third Generation Partnership Project (3GPP) provides new 5G architecture that supports data connections and services and enables the deployment to use network function virtualization (NFV), meeting 5G network requirements.

In the 5G architecture, Session Management Function (SMF) entity is responsible for completing service management such as session management, and also needs to implement functions of collecting and reporting charging information, and send the charging information to an online charging system (OCS) or a billing center (BD). Some pure time charging and traffic charging occupy a large number of resources of the SMF. Therefore, the load of the SMF needs to be reduced.

### SUMMARY

The following is a summary of the subject matter described herein in detail.

Embodiments of the present application provide a charging realisation system, a charging realisation method and a charging management function (CMF) entity.

In a first aspect, the embodiments of the present application provide a charging realisation system. The system includes a network function (NF) entity and a user plane function (UPF) entity and a CMF entity. The CMF entity is connected to the NF entity and the UPF entity.

The CMF entity is configured to execute at least one of: issuing a charging strategy to the UPF entity or the NF entity; collecting charging information from the NF entity and the UPF entity; or reporting the charging information.

In a second aspect, the embodiments of the present application provide a charging realisation method. The method includes at least one of the following steps.

A CMF entity issues a charging strategy to a UPF entity or an NF entity.

The CMF entity collects charging information from the NF entity and the UPF entity which are to be charged.

The CMF entity reports the collected charging information.

In a third aspect, the embodiments of the present application provide a CMF entity. The CMF entity includes at least one of: a strategy issuing unit, an information collecting unit or an information reporting unit.

The strategy issuing unit is configured to issue a charging strategy to a UPF entity or an NF entity.

The information collecting unit is configured to collect charging information from the NF entity and the UPF entity which are to be charged.

The information reporting unit is configured to report the collected charging information.

In a fourth aspect, the embodiments of the present application provide a CMF entity. The CMF entity includes a memory and a processor. The memory is configured to store charging realisation programs which, when executed by the processor, implement the steps of the charging realisation method described in the second aspect.

In a fifth aspect, the embodiments of the present application provide a computer-readable medium, storing charging realisation programs which, when executed by a processor, implement the steps of the charging realisation method described in the second aspect.

In the embodiments of the present application, by extending the 3GPP 23,501 protocol, a new CMF entity is added. Under the 5G architecture, the new CMF entity delivers the charging strategy, collects the charging information, and report the charging information, thereby reducing the load of the SMF entity, simplifying network connection and facilitating charging maintenance and service management for operators.

Other aspects can be understood after the drawings and the detailed description are read and understood.

### BRIEF DESCRIPTION OF DRAWINGS

FIG. 1 is a schematic diagram of an architecture of 3GPP 23.501 standards;
FIG. 2 is a schematic diagram of an architecture of a charging realisation system according to an embodiment of the present application;
FIG. 3 is a schematic diagram of a charging strategy notification process according to an embodiment of the present application;
FIG. 4 is a schematic diagram of a credit request process of online charging according to an embodiment of the present application;
FIG. 5 is a schematic diagram of a traffic quota exhaustion process of online charging according to an embodiment of the present application;
FIG. 6 is a schematic diagram of a traffic quota exhaustion process of offline charging according to an embodiment of the present application;
FIG. 7 is a schematic diagram of a time quota exhaustion process of online charging according to an embodiment of the present application;
FIG. 8 is a schematic diagram of a time quota exhaustion process of offline charging according to an embodiment of the present application;
FIG. 9 is a schematic diagram of a charging process triggered by a control plane according to an embodiment of the present application;
FIG. 10 is a schematic diagram of an CMF and a SMF compatible with a UPF and deployed with the UPF in a combined manner according to an embodiment of the present application;
FIG. 11 is a schematic diagram of charging parameter delivery among CMF, UPF and SMF according to an embodiment of the present application;
FIG. 12 is a flowchart of a charging realisation method according to an embodiment of the present application;
FIG. 13 is a schematic diagram of a CMF entity according to an embodiment of the present application; and
FIG. 14 is another schematic diagram of a CMF entity according to an embodiment of the present application.

### DETAILED DESCRIPTION

The embodiments of the present application will be described in detail in conjunction with the drawings, and it should be understood that the embodiments described hereinafter are intended to describe and explain the present application and not to limit the present application.

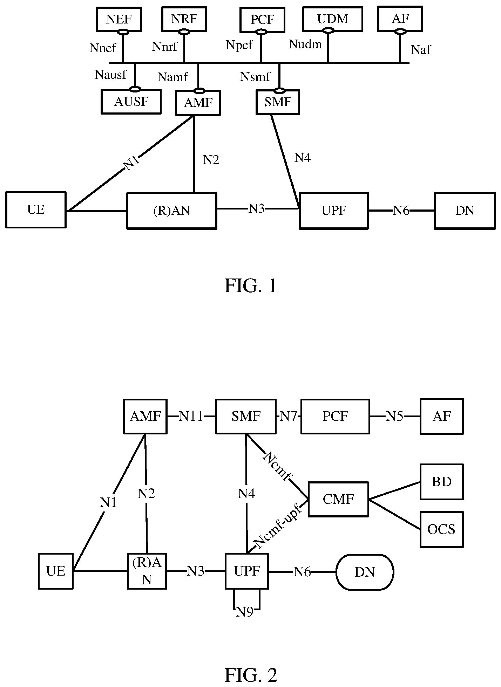

FIG. 1 is a schematic diagram of an architecture of 3GPP 23.501 standards. The architecture includes following structures: a Network Exposure Function (NEF) entity, a Network Repository Function (NRF), a Policy Control Function (PCF) entity, a User Data Management (UDM) entity, an Application Function (AF) entity, an Authentication Server Function (AUSF) entity, an Access Management Function (AMF) entity, an SMF entity, a User Equipment (UE), a (Radio) Access Network ((R)AN), a UPF entity, a Data Network (DN), a BD, an OCS and the like. Nnef denotes an interface of the NEF, Nnrf denotes an interface of the NRF, Npcf denotes an interface of the PCF, Nudm denotes an interface of the UDM, Naf denotes an interface of the AF, Nausf denotes an interface of the AUSF, Nsmf denotes an interface of the SMF, N1 denotes an interface between the UE and the AMF, N2 denotes an interface between the AMF and the (R)AN, N3 denotes an interface between the (R)AF and the UPF, N4 denotes an interface between the SMF and the UPF, and N6 denotes an interface between the UPF and the DN.

In the above architecture, the SMF entity is responsible for completing service management such as session management, and also needs to implement functions of collecting and reporting charging information, and send the charging information to an OCS or a BD.

FIG. 2 is a schematic diagram of an architecture of a charging realisation system according to an embodiment of the present application. As shown in FIG. 2, the charging realisation system provided by the embodiment at least includes an NF entity, a UPF entity and a CMF entity. The CMF entity is connected to the NF entity and the UPF entity. The CMF entity is configured to execute at least one of the following: issuing a charging strategy to the UPF entity or the NF entity; collecting charging information from the NF entity and the UPF entity; or reporting charging information. Exemplarily, the NF entity may include the SMF entity.

In the embodiment, the CMF entity is connected to the NF entity and the UPF entity which are to be charged, and is responsible for issuing the charging strategy and collecting and reporting the charging information. Exemplarily, the charging information collected by the CMF entity may include at least one of: online charging information or offline charging information, that is, the CMF entity can output both the online charging information and the offline charging information. The CMF entity is a uniform outlet for all NF entities to be charged. In such a way, the network connection is simplified, and subsequent charging maintenance and service management are facilitated for operators.

In the embodiment, the communication between the CMF entity and the NF entity is implemented through the Ncmf interface (a service-based interface exhibited by the CMF), and the communication between the CMF entity and the UPF entity is implemented through the Ncmf-upf interface. In other words, an interface between the NF entity and the CMF entity is the Ncmf interface, and an interface between the CMF entity and the UPF entity is the Ncmf-upf interface. Exemplarily, the CMF entity can acquire traffic information of a user from the UPF entity through the Ncmf-upf interface, and can also issue the charging strategy to the UPF entity through this interface; and the CMF entity can acquire user information, session information and the charging strategy through the Ncmf interface between the CMF entity and the NF entity.

In FIG. 2, N1 denotes an interface between the UE and the AMF, N2 denotes an interface between the AMF and the (R)AN, N3 denotes an interface between the (R)AF and the UPF, N4 denotes an interface between the SMF and the UPF, N6 denotes an interface between the UPF and the DN, N7 denotes an interface between the SMF and the PCF, and N9 denotes an interface between UPFs of different users.

In an exemplary embodiment, the CMF entity may be configured to issue the charging strategy to the UPF entity in at least one of manners described below.

The CMF entity acquires a charging strategy from the SMF entity or the PCF entity, and issues the charging strategy to the UPF entity.

The CMF entity acquires a charging strategy from the OCS, and issues the charging strategy to the UPF entity.

The CMF entity may be configured to issue the charging strategy to the NF entity in the following manner: the CMF entity acquires a charging strategy from the OCS, and issues the charging strategy to the NF entity (e.g., the SMF entity).

The charging information may include quota information of time or traffic corresponding to a rating group (RG). For example, the charging strategy may include: charging after the user uses a data service for 30 minutes; or the charging strategy may include: charging after the traffic of the data service used by the user reaches 30 M.

In an exemplary embodiment, the charging information may include: user information, traffic information and session information.

The CMF entity may be configured to collect the charging information from the NF entity and the UPF entity in a manner described below.

The CMF entity collects the user information and the session information from the NF entity. The CMF entity collects the traffic information from the UPF entity.

In an exemplary embodiment, the CMF entity may be configured to collect the traffic information from the UPF entity in at least one of manners described below.

The CMF entity inquires the UPF entity about the traffic information in response to expiring of a timer set according to the charging strategy.

The CMF entity receives traffic information, which is notified by the UPF entity when the charging strategy is satisfied.

The CMF entity, after receiving a control plane triggering update message notified by the SMF entity, inquires the UPF entity about the traffic information.

Exemplarily, the control plane triggering update message notified by the SMF entity may include a public land mobile network (PLMN) update message.

For example, when the user of the CMF entity has the charging strategy of reporting every 30 minutes, the CMF entity sets an expiring time of a timer of the user to 30 minutes. When the user uses the data service and the timing of the timer reaches 30 minutes, the CMF entity inquires the UPF entity about traffic information of the user, generates a call detail record (CDR), and reports the generated CDR to the BD; and in the whole process, the SMF entity does not need to participate.

For example, when the user of the CMF entity has the charging strategy of reporting every 30 M-CDR, the CMF entity issues the charging strategy of reporting every 30 M-CDR to the UPF entity. When the trafic used by the user reaches 30 M, the UPF entity notifies the CMF entity of traffic information, and the CMF entity generates a CDR and reports the CDR to the BD; and in the whole process, the SMF entity does not need to participate.

For example, when the user moves, the PLMN changes, the SMF entity notifies the CMF entity that the PLMN of the user changes, the CMF entity inquiries about online and offline charging strategies of the user respectively. If the online and offline charging strategies need to be reported, the CMF entity generates corresponding charging information, and reports the charging information to online and offline charging centers. The SMF entity only needs to send one notification message, and the CMF entity supports reporting of both the online charging information and offline charging information, thereby reducing the load of the SMF entity.

In an exemplary embodiment, the charging information may include at least one of: online charging information or offline charging information. The system in the embodiment may further include at least one of: an OCS or a BD; and the CMF entity is connected to at least one of the OCS or the BD.

The CMF entity can report the charging information in at least one of manners described below.

The CMF entity reports the online charging information to the OCS.

The CMF entity reports the offline charging information to the BD.

The processing process of the charging realisation system of the present application will be described below by way of multiple embodiments.

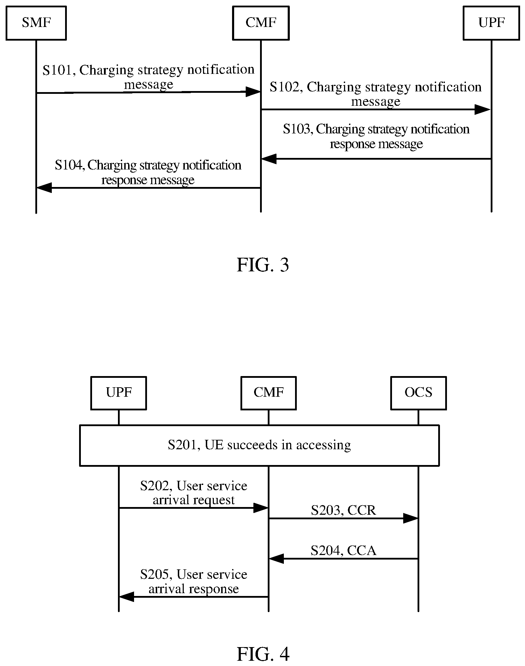

FIG. 3 is a schematic diagram of a charging strategy notification process according to an embodiment of the present application. As shown in FIG. 3, the charging strategy notification process of the embodiment includes steps described below.

In S 101, the SFM entity acquires a charging strategy of a user in a session creation or session update process (e.g., acquiring the charging strategy from the PCF entity), and notifies the CMF entity through a charging strategy notification message, where the charging strategy notification message may include online and offline charging strategies.

In S102, after receiving the charging strategy notification message, the CMF entity acquires a charging strategy carried in this message and a local charging strategy, and then selects an appropriate charging strategy according to a strategy priority specified by the operator, store this appropriate charging strategy into charging context, and sends the charging strategy notification message to the UPF entity, where the charging strategy notification message carries the appropriate charging strategy selected by the CMF entity.

In S103, after receiving the charging strategy notification message, the UPF entity stores the charging strategy carried in this message into charging strategy context, and sends a charging strategy notification response message to the CMF entity.

In S104, after receiving the charging strategy notification response message sent by the UPF entity, the CMF entity sends the charging strategy notification response message to the SMF entity.

FIG. 4 is a schematic diagram of a credit request process of online charging according to an embodiment of the present application. As shown in FIG. 4, the credit request process of online charging of the embodiment includes steps described below.

In S201, a UE succeeds in accessing, where for the attach process of the UE, reference may be made to the 3GPP 23.501 protocol process, which is not repeated herein.

In S202, when the UE uses a service, the UPF entity discovers a new service of the user, and reports a user service arrival request to the CMF entity.

In S203, the CMF entity identifies a current RG according to information carried by the user service arrival request, reports the RGto the OCS through a credit-control-request (CCR) message, and request quota information from the OCS.

In S204, the OCS replies a successful credit-control-answer (CCA), which indicates to proceed the service, and issues time or traffic quota information corresponding to the RG.

In S205, after the CMF entity receives the time or traffic quota information issued by the OCS. The CMF entity starts a timer in response to receiving the time quota information. In response to receiving the traffic quota information, the CMF entity notifies the UPF entity of the traffic quota information through a service arrival response message, and the UPF entity stores the received traffic quota information.

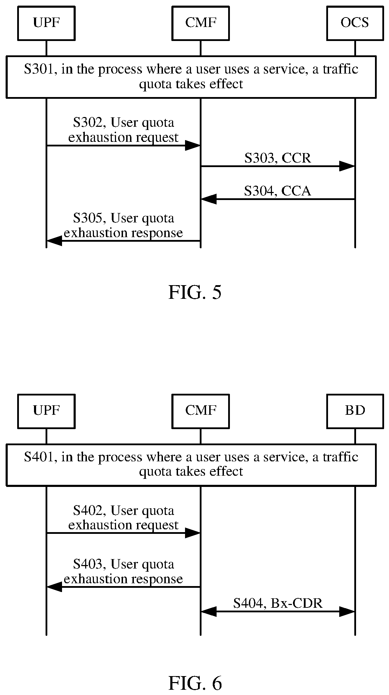

FIG. 5 is a schematic diagram of a traffic quota exhaustion process of online charging according to an embodiment of the present application. As shown in FIG. 5, the traffic quota exhaustion process of online charging of the embodiment includes steps described below.

In S301, in the process where a user uses a service, an online traffic quota takes effect, and the service is used normally.

In S302, in the process where the user uses the service, the UPF entity determines whether the online traffic quota is exhausted, reports a user quota exhaustion request, notifies the CMF entity that the online traffic quota of the user is exhausted, and requests a new quota.

In S303, the CMF entity forms a CCR message including user traffic, time and user information, reports the CCR message to the OCS, and requests a new quota from the OCS.

In S304, after receiving the CCR message, the OCS issues corresponding time or traffic quota information through a CCA message.

In S305, after receiving the time or traffic quota information issued by the OCS, the CMF entity notifies the UPF entity of the quota information newly issued by the OCS through a user quota exhaustion response message, and the UPF entity stores the received quota information.

FIG. 6 is a schematic diagram of a traffic quota exhaustion process of offline charging according to an embodiment of the present application. As shown in FIG. 6, the traffic quota exhaustion process of offline charging of the embodiment includes steps described below.

In S401, in the process where a user uses a service, an offline traffic quota takes effect, and the service is used normally.

In S402, in the process where the user uses the service, the UPF entity determines whether the offline traffic quota is exhausted, reports a user quota exhaustion request, notifies the CMF entity that the offline traffic quota of the user is exhausted, and requests a new quota.

In S403, the CMF entity issues new traffic quota information to the UPF entity.

In S404, the CMF entity generates a CDR message, stores charging information, and sends the CDR message to the BD through a Bx interface for offline charging.

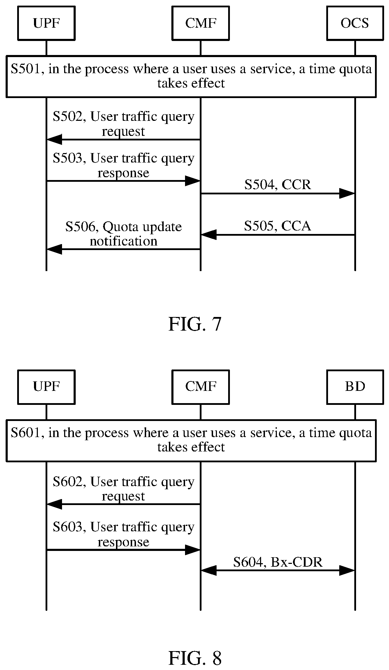

FIG. 7 is a schematic diagram of a time quota exhaustion process of online charging according to an embodiment of the present application. As shown in FIG. 7, the time quota exhaustion process of online charging of the embodiment includes steps described below.

In S501, in the process where a user uses a service, an online time quota takes effect, the CMF entity is provided with a timer, and the user uses the service normally.

In S502, in the process where the user uses the service, the CMF entity determines whether the online time quota is exhausted, and sends a user traffic query request to the UPF entity, that is, the CMF entity inquires the UPF entity about traffic information of the user.

In S503, the UPF entity reports the traffic information of the user to the CMF entity through a user traffic query response message.

In S504, the CMF entity forms a CCR message including user traffic, time and user information, reports the CCR message to the OCS, and requests a new quota from the OCS.

In S505, after receiving the CCR message, the OCS issues corresponding time or traffic quota information to the CMF entity through a CCA message.

In S506, the CMF entity receives the time or traffic quota information issued by the OCS, and instructs the UPF entity to determine a charging strategy according the new quota information.

FIG. 8 is a schematic diagram of a time quota exhaustion process of offline charging according to an embodiment of the present application. As shown in FIG. 8, the time quota exhaustion process of offline charging of the embodiment includes steps described below.

In S601, in the process where a user uses a service, an offline time quota takes effect, the CMF entity is provided with a timer, and the user uses the service normally.

In S602, in the process where the user uses the service, the CMF entity determines whether the offline time quota is exhausted, and sends a user traffic query request to the UPF entity, that is, the CMF entity inquires the UPF entity about traffic information of the user.

In S603, the UPF entity reports the traffic information of the user to the CMF entity through a user traffic query response message.

In S604, the CMF entity generates a CDR message including traffic, time and user information, and reports the CDR message to the BD through a Bx interface to enable the BD to perform offline charging.

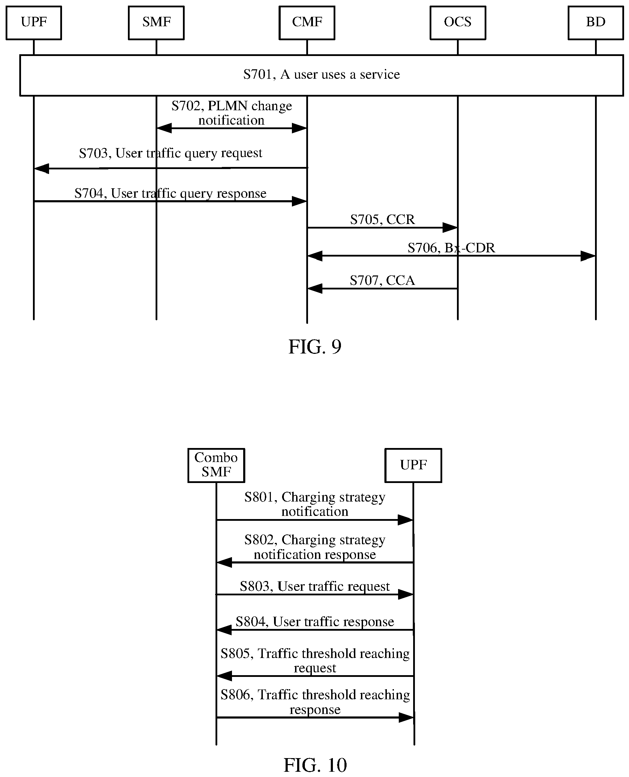

FIG. 9 is a schematic diagram of a charging process of control plane triggering according to an embodiment of the present application. As shown in FIG. 9, the charging process of control plane triggering of the embodiment includes steps described below.

In S701, a user normally uses a service.

In S702, the user moves, which makes a PLMN of the user change (or, there may be other control plane triggering messages), and the SMF entity sends a notification message to the CMF entity to notify the CMF entity that the PLMN of the user changes.

In S703, the CMF entity generates a CDR, and sends a user traffic query request to the UPF entity, that is, the CMF inquires the UPF entity about traffic information of user online and offline charging.

In S704, the UPF entity reports the traffic information of the user to the CMF entity through a user traffic query response message.

In S705, the CMF entity forms a CCR message with user traffic, time and user information, reports online charging information to the OCS, and requests a new quota from the OCS.

In S706, the CMF entity generates a CDR message including user traffic, time and user information, and reports the CDR message to the BD through a Bx interface.

In S707, the OCS, after receiving the CCR message, issues corresponding time or traffic quota information through a CCA message, and the CMF entity receives the time or traffic quota information issued by the OCS, and instructs the UPF entity to install a charging strategy according to the new quota information.

FIG. 10 is a schematic diagram of an SMF and a CMF that is compatible with a UPF and is deployed with the UPF in a combined manner according to an embodiment of the present application. As shown in FIG. 10, the process between the CMF and SMF compatible with a UPF and deployed with the UPF in a combined manner (hereinafter referred to as ComboSMF) of the embodiment includes steps described below.

In S801, the ComboSFM acquires a charging strategy of a user in a session creation or session update process (e.g., acquiring the charging strategy from the PCF entity), stores a charging strategy related to a control plane, and notifies the UPF entity of the charging strategy related to the user plane through a charging strategy notification message, where the charging strategy notification message may include the user plane charging strategy of online charging and the user plane charging strategy of offline charging.

In S802, after receiving the charging strategies, the UPF entity stores the charging strategies into charging strategy context, and sends a charging strategy notification response message to the ComboSMF.

In S803, when the ComboSMF is to generate a CDR, the ComboSMF sends a user plane traffic request message to the UPF entity, and inquiries about information about traffic of a user or the like.

In S804, the UPF entity, after receiving the traffic request message of the user, acquires the traffic information of the user, and returns a user traffic response message to the ComboSMF.

In S805, if a traffic threshold of the user is reached, the UPF entity can actively send a traffic threshold reaching request message to the ComboSMF, and continue to request a traffic quota for the user.

In S806, the ComboSMF, after receiving the traffic threshold reaching request message, stores related data of the user, generates a CDR or a CCR message, notifies the OCS entity of the CDR or the CCR message, and returns a traffic threshold reaching response message to the UPF entity.

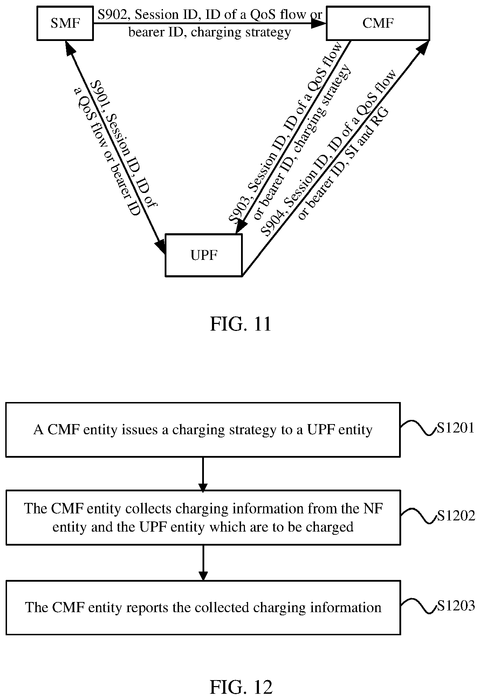

FIG. 11 is a schematic diagram of charging parameter delivery among CMF entity, UPF entity and SMF entity according to an embodiment of the present application. As shown in FIG. 11, the charging parameter delivery among the CMF entity, the UPF entity and the SMF entity of the embodiment includes steps described below.

In S901, the SMF entity, when creating the UPF entity in a session, associates a session identifier (ID) of a protocol data unit (PDU), an ID of a Quality of Service (QoS) flow or a bearer ID, and QoS information of a user to the same QoS flow or bearer under the same session between the SMF entity and the UPF entity.

In S902, the SMF entity starts to perform charging and sends a charging start message to the CMF entity, which carries a charging strategy and parameters such as the session ID of the PDU and the ID of the QoS flow or the bearer ID.

In S903, the CMF entity, when determining a final charging strategy according to the strategy, delivers the session ID of the PDU and the ID of the QoS flow or the bearer ID to the UPF entity through a charging strategy notification message; and the UPF entity, after receiving the message, finds a current QoS flow or bearer according to the session ID of the PDU and the ID of the QoS flow or the bearer ID, and stores the charging strategy.

In S904, when receiving a packet of the user, the UPF entity acquires a session ID (SI) and a RG corresponding to the current packet according to the charging strategy, and notifies the CMF entity through a quota arrival message; and the CMF entity fills the SI and the RG into a CDR, and reports the CDR to the BD to charge the user.

The embodiments of the present application further provide a charging realisation method. The method includes at least one of the following: issuing, by a CMF entity, a charging strategy to a UPF entity or an NF entity; collecting, by the CMF entity, charging information from the NF entity and the UPF entity which are to be charged; and reporting, by the CMF entity, the collected charging information.

FIG. 12 is a flowchart of a charging realisation method according to an embodiment of the present application. As shown in FIG. 12, the charging realisation method provided in the embodiment includes steps described below.

In S 1201, a CMF entity issues a charging strategy to a UPF entity.

In S1202, the CMF entity collects charging information from the NF entity and the UPF entity which are to be charged.

In S 1203, the CMF entity reports the collected charging information.

The CMF entity communicates with the NF entity through the Ncmf interface, and the CMF entity communicates with the UPF entity through the Ncmf-upf interface.

Exemplarily, the step in which the CMF entity issues the charging strategy to the UPF entity may include at least one of steps described below.

The CMF entity acquires a charging strategy from the SMF entity or the PCF entity, and issues the charging strategy to the UPF entity.

The CMF entity acquires a charging strategy from the OCS, and issues the charging strategy to the UPF entity.

Exemplarily, the step in which the CMF entity issues the charging strategy to the NF entity may include that: the CMF entity acquires a charging strategy from the OCS, and issues the charging strategy to the NF entity. Exemplarily, the NF entity may include the SMF entity.

Exemplarily, the charging information may include: user information, traffic information and session information.

The S2102 may include steps described below.

The CMF entity collects the user information and the session information from the NF entity.

The CMF entity collects the traffic information from the UPF entity.

Exemplarily, the step in which the CMF entity collects the traffic information from the UPF entity may include at least one of steps described below.

The CMF entity inquires the UPF entity about the traffic information in response to expiring of a timer set according to the charging strategy.

The CMF entity receives traffic information which is notified by the UPF entity when the charging strategy is satisfied.

The CMF entity, after receiving a control plane triggering update message notified by the SMF entity, inquires the UPF entity about the traffic information.

Exemplarily, the charging information may include at least one of the following: online charging information or offline charging information.

The S1203 may include at least one of steps described below.

The CMF entity reports the online charging information to the OCS.

The CMF entity reports the offline charging information to the BD.

For the description of the method provided in the embodiment, reference may be made to the description of the above-mentioned system embodiment, and thus no further details are provided herein.

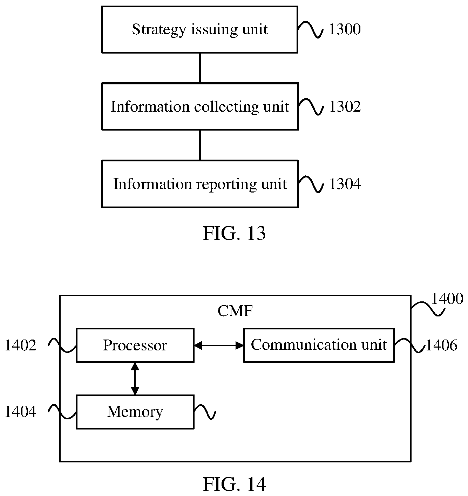

FIG. 13 is a schematic diagram of a CMF entity according to an embodiment of the present application. As shown in FIG. 13, the CMF entity provided in the embodiment includes at least one of: a strategy issuing unit 1300, an information collecting unit 1302 or an information reporting unit 1304.

The strategy issuing unit 1300 is configured to issue a charging strategy to an NF entity or a UPF entity.

The information collecting unit 1302 is configured to collect charging information from the NF entity and the UPF entity which are to be charged.

The information reporting unit 1304 is configured to report the collected charging information.

The CMF entity communicates with the NF entity through the Ncmf interface, and the CMF entity communicates with the UPF entity through the Ncmf-upf interface.

Exemplarily, the strategy issuing unit 1300 can be configured to issue the charging strategy to the UPF entity in at least one of manners described below.

The strategy issuing unit acquires a charging strategy from the SMF entity or the PCF entity, and delivers the charging strategy to the UPF entity.

The strategy issuing unit acquires a charging strategy is acquired from the OCS, and delivers the charging strategy to the UPF entity.

The strategy issuing unit 1300 may be configured to issue the charging strategy to the NF entity in the following manner: acquiring a charging strategy from the OCS, and issuing the charging strategy to the NF entity. Exemplarily, the NF entity may include the SMF entity.

Exemplarily, the charging information may include: user information, traffic information and session information.

The information collecting unit 1302 is configured to collect the charging information in a manner described below.

The information collecting unit collects the user information and the session information from the NF entity.

The information collecting unit collects the traffic information from the UPF entity.

Exemplarily, the information collecting unit 1302 is configured to collect the traffic information from the UPF entity in at least one of manners described below.

The information collecting unit inquires the UPF entity about the traffic information in response to expiring of a timer set according to the charging strategy.

The information collecting unit receives the traffic information which is notified by the UPF entity when the charging strategy is satisfied.

After receiving a control plane triggering update message notified by the SMF entity, the information collecting unit inquires the UPF entity about the traffic information.

Exemplarily, the charging information may include at least one of: online charging information or offline charging information.

The information reporting unit 1304 is configured to report the collected charging information in at least one of manners described below.

The online charging information is reported to the OCS.

The offline charging information is reported to the BD.

For the description of the CMF entity provided in the embodiment, reference may be made to the description of the above-mentioned method embodiment and system embodiment, and thus no further details are provided herein.

FIG. 14 is another schematic diagram of a CMF entity according to an embodiment of the present application. As shown in FIG. 14, the CMF entity 1400 of the embodiment includes a memory 1401 and a processor 1402. It should be understood by those skilled in the art that the structure of the CMF entity illustrated in FIG. 14 does not limit the CMF entity 1400, and the CMF entity 1400 may include more or fewer components than those illustrated, or assembly of some components or the layout of different components.

The processor 1402 may include, but is not limited to, a microcontroller unit (MCU), a field programmable gate array (FPGA) or another processing apparatus. The memory 1404 may be configured to store software programs of application software, or modules, such as program instructions/modules corresponding to the charging realisation method in the embodiments of the present application. The processor 1402 executes the software programs or modules stored in the memory 1404 to perform functional applications and data processing, that is, to implement the charging realisation method in the embodiments of the present application. The memory 1404 may include a high-speed random access memory, or may further include a nonvolatile memory such as one or more magnetic storage apparatuses, flash memories or other nonvolatile solid-state memories. In some examples, the memory 1404 may further include memories that are remotely disposed with respect to the processor 1402. These remote memories may be connected to the above-mentioned CMF entity 1400 via a network. Examples of the above network include, but are not limited to, the Internet, an intranet, a local area network, a mobile communication network and a combination thereof.

Exemplarily, the CMF entity 1400 may further include a communication unit 1406; and the communication unit 1406 may receive or transmit data via a network. In one example, the communication unit 1406 may be a radio frequency (RF) module, which is configured to communicate with the Internet in a wireless way.

It is to be noted that the CMF provided in the embodiment may be implemented by software, hardware or a combination of software and hardware. However, the present application is not limited to this.

In addition, the embodiments of the present application further provide a computer-readable medium, storing charging realisation programs which, when executed by a processor, implement the steps of the above-mentioned charging realisation method.

It should be understood by those skilled in the art that functional modules or units in all or part of the steps of the method, the system and the device provided above may be implemented as software, firmware, hardware and appropriate combinations thereof. In the hardware implementation, the division of functional modules or units mentioned in the above description may not correspond to the division of physical components. For example, one physical component may have multiple functions, or one function or step may be executed jointly by several physical components. Some or all components may be implemented as software executed by processors such as digital signal processors or microcontrollers, hardware, or integrated circuits such as application specific integrated circuits. Such software may be distributed on a machine-readable medium (such as a computer-readable medium). The computer-readable medium may include a computer storage medium (or a non-transitory medium) and a communication medium (or a transitory medium). As is known to those skilled in the art, the term, computer storage media, includes volatile and nonvolatile, removable and non-removable media implemented in any method or technology for storing information (such as computer-readable instructions, data structures, program modules or other data). The computer storage media include, but are not limited to, a random access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storage, a magnetic cassette, a magnetic tape, a magnetic disk storage or other magnetic storage devices, or any other medium configured for storing desired information and accessible by the computer. In addition, as is known to those skilled in the art, the communication medium generally includes computer-readable instructions, data structures, program modules or other data in modulated data signals such as carriers or other transmission mechanisms, and may include any information delivery medium.

The above illustrate and describe the basic principles, main features and advantages of the present application. The present application is not limited to the embodiments described above. The above-mentioned embodiments and the specification describe only the principles of the present application. Various modifications and improvements may be made in the present application without departing from the spirit and scope of the present application. These modifications and improvements are within the scope of the present application.

## Claims

1. A charging realisation system, comprising: a network function entity, a user plane function entity and a charging management function entity,
wherein the charging management function entity is connected to the network function entity and the user plane function entity;
wherein the charging management function entity is configured to execute at least one of the following: issuing a charging strategy to the user plane function entity or the network function entity; collecting charging information from the network function entity and the user plane function entity; or reporting the charging information.

2. The system of claim 1, wherein the charging management function entity communicates with the network function entity through a Ncmf interface, and the charging management function entity communicates with the user plane function entity through a Ncmf-upf interface.

3. The system of claim 1, wherein the charging management function entity is configured to issue the charging strategy to the user plane function entity in at least one of the following manners:
the charging management function entity acquires a charging strategy from a service management function entity or a policy control function entity, and issues the charging strategy to the user plane function entity; or
the charging management function entity acquires a charging strategy from an online charging system, and issues the charging strategy to the user plane function entity,
wherein the charging management function entity is configured to issue the charging strategy to the network function entity in the following manner: the charging management function entity acquires a charging strategy from an online charging system, and issues the charging strategy to the network function entity.

4. The system of claim 1, wherein the charging information comprises: user information, traffic information and session information;
the charging management function entity is configured to collect the charging information from the network function entity and the user plane function entity in the following manner:
the charging management function entity collects the user information and the session information from the network function entity; and
the charging management function entity collects the traffic information from the user plane function entity.

5. The system of claim 4, wherein the charging management function entity is configured to collect the traffic information from the user plane function entity in at least one of the following manners:
the charging management function entity inquires the user plane function entity about the traffic information in response to expiring of a timer set according to the charging strategy;
the charging management function entity receives traffic information notified by the user plane function entity when the charging strategy is satisfied; or
the charging management function entity, after receiving a control plane triggering update message notified by a service management function entity, inquires the user plane function entity about the traffic information.

6. The system of claim 1, wherein the charging information comprises at least one of: online charging information or offline charging information;
wherein the system further comprises at least one of: an online charging system or a billing center;
wherein the charging management function entity is connected to the at least one of the online charging system or the billing center;
wherein the charging management function entity reports the charging information in at least one of the following manners:
the charging management function entity reports the online charging information to the online charging system; or
the charging management function entity reports the offline charging information to the billing center.

7. A charging realisation method, comprising at least one:
issuing, by a charging management function entity, a charging strategy to a user plane function entity or a network function entity;
collecting, by the charging management function entity, charging information from the network function entity and the user plane function entity which are to be charged; or
reporting, by the charging management function entity, the collected charging information.

8. The method of claim 7, wherein the charging management function entity communicates with the network function entity through a Ncmf interface, and the charging management function entity communicates with the user plane function entity through a Ncmf-upf interface.

9. The method of claim 7, wherein issuing, by the charging management function entity, the charging strategy to the user plane function entity comprises at least one of the following:
acquiring, by the charging management function entity, a charging strategy from a service management function entity or a policy control function entity, and issuing the charging strategy to the user plane function entity; or
acquiring, by the charging management function entity, a charging strategy from an online charging system, and issuing the charging strategy to the user plane function entity;
wherein issuing, by the charging management function entity, the charging strategy to the network function entity comprises: acquiring, by the charging management function entity, a charging strategy from an online charging system, and issuing the charging strategy to the network function entity.

10. The method of claim 7, wherein the charging information comprises: user information, traffic information and session information;
wherein collecting, by the charging management function entity, the charging information from the network function entity and the user plane function entity which are to be charged comprises:
collecting, by the charging management function entity, the user information and the session information from the network function entity; and
collecting, by the charging management function entity, the traffic information from the user plane function entity.

11. The method of claim 10, wherein collecting, by the charging management function entity, the traffic information from the user plane function entity comprises at least one of the following:
inquiring, by the charging management function entity, the user plane function entity about the traffic information in response to expiring of a timer set according to the charging strategy;
receiving, by the charging management function entity, traffic information notified by the user plane function entity when the charging strategy is satisfied; or
inquiring, by the charging management function entity, after receiving a control plane triggering update message notified by a service management function entity, the user plane function entity for the traffic information.

12. The method of claim 7, wherein the charging information comprises at least one of:
online charging information or offline charging information; and
wherein reporting, by the charging management function entity, the collected charging information comprises at least one of the following:
reporting, by the charging management function entity, the online charging information to an online charging system; or
reporting, by the charging management function entity, the offline charging information to a billing center.

13. A charging management function entity, comprising at least one of:
a strategy issuing unit, which is configured to issue a charging strategy to a user plane function entity or a network function entity;
an information collecting unit, which is configured to collect charging information from the network function entity and the user plane function entity which are to be charged; or
an information reporting unit, which is configured to report the collected charging information.

14. The charging management function entity of claim 13, wherein the charging management function entity communicates with the network function entity through a Ncmf interface, and the charging management function entity communicates with the user plane function entity through a Ncmf-upf interface.

15. A charging management function entity, comprising: a memory and a processor, wherein the memory is configured to store charging realisation programs which, when executed by the processor, implement steps of the charging realisation method of any one of claims 7 to 12.

16. A computer-readable medium storing charging realisation programs which, when executed by a processor, implement steps of the charging realisation method of any one of claims 7 to 12.
